# EUROPEAN PATENT APPLICATION

(11) **EP 3 843 331 A1**
(43) Date of publication of application: **30.06.2021**
(21) Application number: 18931733.2
(22) Date of filing: 31.10.2018
(51) Int. Cl.: H04L 12/24, H04L 29/08

(54) **PAGE LOADING METHOD, TERMINAL, PAGE RESPONSE METHOD AND SERVER**

(30) Priority: 29.08.2018 CN 201810993928
(71) Applicant: Wangsu Science & Technology Co., Ltd., Shanghai 201800 (CN)
(72) Inventor: ZHENG, Jiaxing, Shanghai 201800 (CN)
(74) Representative: De Arpe Tejero, Manuel
(86) International application number: PCT/CN2018/113026
(87) International publication number: WO 2020/042328

(57) **Abstract**

A page-loading method is applied to a terminal and includes: sending a page access request to a server, downloading page content returned by the server, and acquiring page content download information; parsing out a loading optimization script and address information of one or more to-be-loaded page elements from the page content; running the loading optimization script, and acquiring a current loading quality parameter for the one or more to-be-loaded page elements according to the page content download information; and loading the one or more to-be-loaded page elements according to the address information of the one or more to-be-loaded page elements and the current loading quality parameter.

## Description

### FIELD OF DISCLOSURE

The present disclosure generally relates to the field of network technology and, more particularly, relates to a page-loading method and terminal and a page-responding method and server.

### BACKGROUND

Currently, webpages viewed by users generally include various elements, such as HTML documents, JS scripts, and image resources, among which the most common webpage resources are image resources. When there are many image resources in a webpage, the loading speed of the webpage will be slower. If the network condition of a user is poor, the loading time of the webpage will be further increased, therefore, the user experience is poor. For this situation, if there are many image resources in a webpage, a lazy-loading strategy may be adopted, where the image resources in the webpage are loaded with blurred images by default. An original image will be loaded only until a user browses it, thereby shortening the loading time of the webpage.

Applicant has found that the existing technologies have at least the following problems: even if a lazy-loading strategy is adopted, if the network of a user is poor or if there are a lot of image resources when the webpage is first displayed, the loading time of the webpage is still long, and thus the user experience is poor.

### BRIEF SUMMARY OF THE DISCLOSURE

The objective of the embodiments of the present disclosure is to provide a page-loading method and a terminal thereof and a page-responding method and a server thereof, which increase page-loading speed.

To solve the above technical problems, the embodiments of the present disclosure provide a page-loading method for application on a terminal. The method includes: sending a page access request to a server, downloading page content returned by the server, and acquiring page content download information; parsing out a loading optimization script and address information of one or more to-be-loaded page elements from the page content; running the loading optimization script, and acquiring a current loading quality parameter for the one or more to-be-loaded page elements according to the page content download information; and loading the one or more to-be-loaded page elements according to the address information of the one or more to-be-loaded page elements and the current loading quality parameter.

The embodiments of the present disclosure further provide a page-responding method for application on a server. The method includes: when a page access request sent by a terminal is received, acquiring page content corresponding to the page access request, and inserting a preset loading optimization script into the page content; and returning, to the terminal, the page content including the inserted loading optimization script, to allow the terminal to parse out the loading optimization script and address information of one or more to-be-loaded page elements from the page content, run the loading optimization script, acquire a current loading quality parameter for the one or more to-be-loaded page elements according to page content download information, and load the one or more to-be-loaded page elements according to the address information of the one or more to-be-loaded page elements and the current loading quality parameter.

The embodiments of the present disclosure further provide a terminal, which comprises at least one processor and a memory communicatively coupled to the at least one processor, where the memory stores instructions executable by the at least one processor, and the instructions when executed by the at least one processor cause the at least one processor to implement the above-described page-loading method.

The embodiments of the present disclosure further provide a computer-readable storage medium storing a computer program. The computer program, when executed by a processor, implements the above-described page-loading method.

The embodiments of the present disclosure further provide a server. The server comprises at least one processor and a memory communicatively coupled to the at least one processor, where the memory stores instructions executable by the at least one processor, and the instructions when executed by the at least one processor cause the at least one processor to implement the above-described page-responding method.

Compared with the existing technologies, in the disclosed embodiment, after a terminal sends a page access request to the server, the terminal downloads the page content returned by the server and obtains the page content download information. The terminal parses out a loading optimization script and the address information of the to-be-loaded page elements from the page content. That is, the page content returned by the server includes a loading optimization script and the address information of the to-be-loaded page elements. Next, the terminal runs the loading optimization script to obtain the current loading quality parameter for the to-be-loaded page elements according to the page content download information, and loads the to-be-loaded page elements according to the address information of the to-be-loaded page elements and the current loading quality parameter. That is, the corresponding current loading quality parameter is set for the to-be-loaded page elements according to the page content download information. When the page content download information looks good, to-be-loaded page elements with high quality are downloaded. When the page content download information looks bad, to-be-loaded page elements with lower quality are downloaded. In this way, the page-loading speed is improved.

Further, the one or more to-be-loaded page elements include one or more to-be-loaded page elements in a visible area and one or more to-be-loaded page elements outside the visible area, and loading the one or more to-be-loaded page elements according to the address information of the one or more to-be-loaded page elements and the current loading quality parameter specifically includes: loading the one or more to-be-loaded page elements in the visible area according to address information of the one or more to-be-loaded page elements in the visible area and the current loading quality parameter, and acquiring response information of the one or more to-be-loaded page elements in the visible area; updating the current loading quality parameter according to the response information of the one or more to-be-loaded page elements in the visible area; and loading the one or more to-be-loaded page elements outside the visible area according to address information of the one or more to-be-loaded page elements outside the visible area and the updated current loading quality parameter. In the disclosed embodiment, in a case that the current loading quality parameter determined based on the page content download information alone may be insufficiently accurate, the current loading quality parameter may be updated according to the response information of the to-be-loaded page elements in the visible area, after the loading of the to-be-loaded page elements in the visible area is completed. This then allows a more accurate loading quality parameter to be acquired. By loading the to-be-loaded page elements outside the visible area using the updated current loading quality parameter, the page-loading speed is further improved.

Further, before loading the one or more to-be-loaded page elements outside the visible area according to the address information of the one or more to-be-loaded page elements outside the visible area and the updated current loading quality parameter, the method further includes: monitoring one or more page elements in the visible area, and determining whether there is a change among the one or more page elements in the visible area within a preset time period; when there is no change among the one or more page elements in the visible area within the preset time period, loading the one or more to-be-loaded page elements outside the visible area according to the address information of the one or more to-be-loaded page elements outside the visible area and the updated current loading quality parameter; and when there is a change among the one or more page elements in the visible area within the preset time period and when there is an unloaded to-be-loaded page element in the visible area, loading the unloaded to-be-loaded page element in the visible area according to address information of the unloaded to-be-loaded page element in the visible area and the updated current loading quality parameter. In the disclosed embodiment, the page elements in the visible area are monitored. If there is a change among the page elements in the visible area within a preset duration, and if there is an unloaded to-be-loaded page element in the visible area, the unloaded to-be-loaded page element in the visible area is loaded. If there is no change among the page elements in the visible area within the preset duration, the to-be-loaded page elements outside the visible area are then loaded, which reduces the concurrent loading of the to-be-loaded page elements, thereby increasing the loading speed of the to-be-loaded page elements.

Further, the one or more to-be-loaded page elements in the visible area include a plurality of to-be-loaded page elements, and the response information of the one or more to-be-loaded page elements in the visible area includes a size of each of the one or more to-be-loaded page elements in the visible area and a response time period for each of the one or more to-be-loaded page elements in the visible area; and updating the current loading quality parameter according to the response information of the one or more to-be-loaded page elements in the visible area specifically includes: when there is no overlap among response time periods of the plurality of to-be-loaded page elements in the visible area, acquiring a loading quality parameter of each of the one or more to-be-loaded page elements in the visible area according to response information of each of the one or more to-be-loaded page elements in the visible area, and determining a maximum loading quality parameter, among loading quality parameters of the one or more to-be-loaded page elements in the visible area, as the current loading quality parameter, and when there is an overlap among the response time periods of the plurality of to-be-loaded page elements in the visible area, classifying to-be-loaded page elements that have an overlapping response time period into one group, acquiring a loading quality parameter for each group of to-be-loaded page elements according to response information of the to-be-loaded page elements in each group, and determining a maximum loading quality parameter among loading parameter parameters of a plurality of groups of to-be-loaded page elements as the current loading quality parameter. The disclosed embodiment provides a specific implementation for updating the current loading quality parameter.

Further, a response time period of a to-be-loaded page element includes one or more overlapping time periods and one or more non-overlapping time periods, and acquiring a loading quality parameter for each group of to-be-loaded page elements according to the response information of the to-be-loaded page elements in each group specifically includes: for each of the to-be-loaded page elements in each group, calculating a loading speed of the to-be-loaded page element according to a size of the to-be-loaded page element, the one or more non-overlapping time periods, the one or more overlapping time periods, and a number of overlaps in the one or more overlapping periods; calculating a loading network bandwidth for each group of to-be-loaded page elements according to a size and a loading speed of each of the to-be-loaded page elements in each group and; and determining a loading quality parameter corresponding to the loading network bandwidth for each group of to-be-loaded page elements as the loading quality parameter for each group of to-be-loaded page elements. The disclosed embodiment provides a specific implementation for obtaining a loading quality parameter for each group of to-be-loaded page elements according to response information for the to-be-loaded page elements in each group.

Further, before loading a to-be-loaded page element according to address information of the to-be-loaded page element and the current loading quality parameter, the method further includes: determining, according to the address information of the to-be-loaded page element, whether a same page element is cached on the terminal; if a same page element is cached on the terminal, determining whether a loading quality parameter of the same page element is greater than or equal to the current loading quality parameter; loading the same page element cached on the terminal if the loading quality parameter of the page element is greater than or equal to the current loading quality parameter; and if the loading quality parameter of the page element is less than the current loading quality parameter, or the same page element is not cached on the terminal, loading the to-be-loaded page element according to the address information of the to-be-loaded page element and the current loading quality parameter. In the disclosed embodiment, before loading a to-be-loaded page element, it is determined whether there is a same page element cached on a terminal. If there is a same page element cached on the terminal and the loading quality parameter of the cached page element is greater than the current loading quality parameter, the cached page element on the terminal is directly loaded, thereby allowing a to-be-loaded page element with a greater loading quality parameter to be acquired from the cache of the terminal.

Further, after loading the one or more to-be-loaded page elements according to the address information of the one or more to-be-loaded page elements and the current loading quality parameter, the method specifically includes: caching the loaded one or more to-be-loaded page elements and the current loading quality parameter. In the disclosed embodiment, after loading a to-be-loaded page element, the to-be-loaded page element and the current loading quality parameter are cached, which allows a direct acquisition of a page element from the cache of the terminal when the same page element is loaded next time.

Further, acquiring the current loading quality parameter for the one or more to-be-loaded page elements according to the page content download information specifically includes: calculating a current network bandwidth according to the page content download information; and acquiring a loading quality parameter corresponding to the current network bandwidth as the current loading quality parameter for the one or more to-be-loaded page elements. The disclosed embodiment provides a specific implementation for obtaining the current loading quality parameter for the to-be-loaded page elements according to the page content download information.

Further, a to-be-loaded page element is an image.

### BRIEF DESCRIPTION OF THE DRAWINGS

One or more embodiments of the present disclosure are exemplified by the accompanying drawings. The exemplary illustrations should not be constructed as a limitation to the embodiments of the present disclosure. In the accompanying drawings, like reference numerals refer to like or similar elements. Unless specifically stated, the figures in the accompanying drawings do not constitute a scale limitation.
FIG. 1 is a flowchart of a page-loading method according to some embodiments of the present disclosure;
FIG. 2 is a flowchart of another page-loading method according to some embodiments of the present disclosure;
FIG. 3 is a flowchart of another page-loading method where a sub-step 2042 is detailed according to some embodiments of the present disclosure;
FIG. 4 is a flowchart of another page-loading method according to some embodiments of the present disclosure; and
FIG. 5 is a flowchart of a page-responding method according to some embodiments of the present disclosure.

### DETAILED DESCRIPTION

To make the objective, technical solutions, and advantages of the embodiments of the present disclosure clearer, the embodiments of the present disclosure will be made in detail hereinafter with reference to the accompanying drawings. A person skilled in the art may understand that, in order to provide a reader with a better understanding of the present disclosure, numerous technical details are set forth in the various embodiments of the present disclosure. However, even without these technical details and various variations and modifications based on the following embodiments, the technical solutions claimed in the present disclosure may still be implemented.

Embodiment 1 of the present disclosure relates to a page-loading method, for application on a terminal, such as a mobile phone, a tablet, and the like.

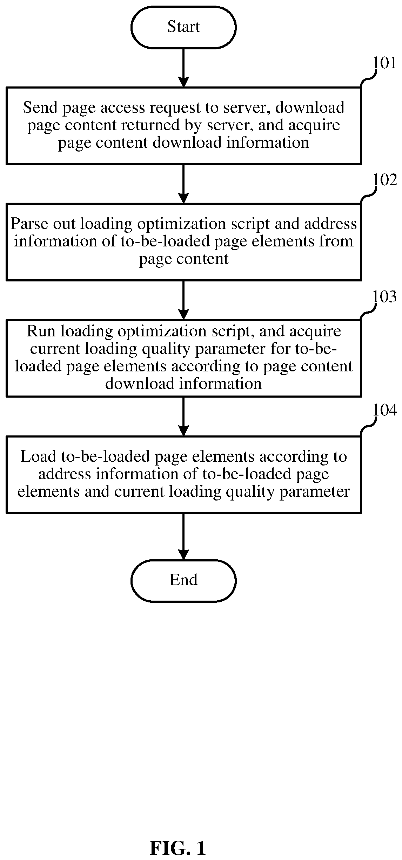

FIG. 1 is a flowchart of a page-loading method consistent with the disclosed embodiment.

Step 101: Send a page access request to a server, download page content returned by the server, and acquire page content download information.

Specifically, when a user inputs an access address in an application such as a browser on a terminal, the terminal sends a page access request to the server. When receiving the page access request, the server acquires the page content corresponding to the page access request, and returns the page content to the terminal. The terminal downloads the page content returned by the server, and may acquire page content download information. Here, the page content may be an HTML document, and the page content download information may include the size of the page content, the response-starting time of the page content, and the response-ending time of the page content.

Step 102: Parse out, from the page content, a loading optimization script and address information of the to-be-loaded page element(s).

Specifically, the page content includes a loading optimization script and address information of one or more to-be-loaded page elements. Accordingly, when the terminal receives the page content, the terminal performs a DOM (Document Object Model) analysis on the page content (e.g., an HTML document), and parses out a loading optimization script and the address information of the to-be-loaded page elements from the page content. Here, the loading optimization script may be inserted into the page content corresponding to the page access request by the server when the server receives the page access request. However, the disclosed embodiment is not limited to this implementation. The loading optimization script may be also pre-loaded into the page content when the developer develops the page.

Step 103: Run the loading optimization script, and acquire a current loading quality parameter for the to-be-loaded page elements according to the page content download information.

Specifically, after parsing out the loading optimization script, the terminal runs the loading optimization script, and obtains the current loading quality parameter for the to-be-loaded page elements according to the page content download information. Specifically, according to the page content download information, the current network bandwidth is calculated. The correspondence between the network bandwidth and the loading quality parameter is pre-stored on the terminal, so that the loading quality parameter corresponding to the current network bandwidth is obtained based on the correspondence, and is used as the current loading quality parameter for the to-be-loaded page elements. Accordingly, based on the current network bandwidth, it may be determined what quality of to-be-loaded page elements are to be loaded. The specific implementation of calculating the current network bandwidth according to the page content download information is: calculating the time for downloading the page content according to the response-ending time and the response-starting time from the page content download information, and dividing the size of the page content by the time for downloading to obtain the current network bandwidth.

Step 104: Load the to-be-loaded page elements according to the address information of the to-be-loaded page elements and the current loading quality parameter.

Specifically, the terminal sends a request, for acquiring to-be-loaded page elements with the current loading quality parameter, to the server according to the address information of the to-be-loaded page elements. After receiving the acquisition request, the server determines whether there is a cached to-be-loaded page element(s) with the current loading quality parameter. If there is no cached to-be-loaded page element with the current loading quality parameter, the server compresses a to-be-loaded page element(s) to obtain a to-be-loaded page element(s) with the current loading quality parameter and returns the to-be-loaded page element(s) to the terminal. The terminal loads the to-be-loaded page element(s) with the current loading quality parameter.

In the disclosed embodiment, a to-be-loaded page element may be an image, a video, or the like.

Compared with the existing technologies, in the disclosed embodiment, after the terminal sends a page access request to the server, the terminal downloads the page content returned by the server and obtains the page content download information. The terminal parses out a loading optimization script and the address information of the to-be-loaded page elements from the page content. That is, the page content returned by the server includes the loading optimization script and the address information of the to-be-loaded page elements. Next, the terminal runs the loading optimization script, and acquires the current loading quality parameter for the to-be-loaded page elements according to the page content download information, and loads the to-be-loaded page elements according to the address information of the to-be-loaded page elements and the current loading quality parameter. That is, the corresponding current loading quality parameter is set for the to-be-loaded page elements according to the page content download information. When the page content download information looks good, to-be-loaded page elements with high quality are downloaded. When the page content download information looks bad, to-be-loaded page elements with lower quality are downloaded. In this way, the page-loading speed is improved.

Embodiment 2 of the present disclosure relates to a page-loading method. The present embodiment is an improvement on the basis of Embodiment 1. The main improvement lies in that: the page-loading speed is further improved.

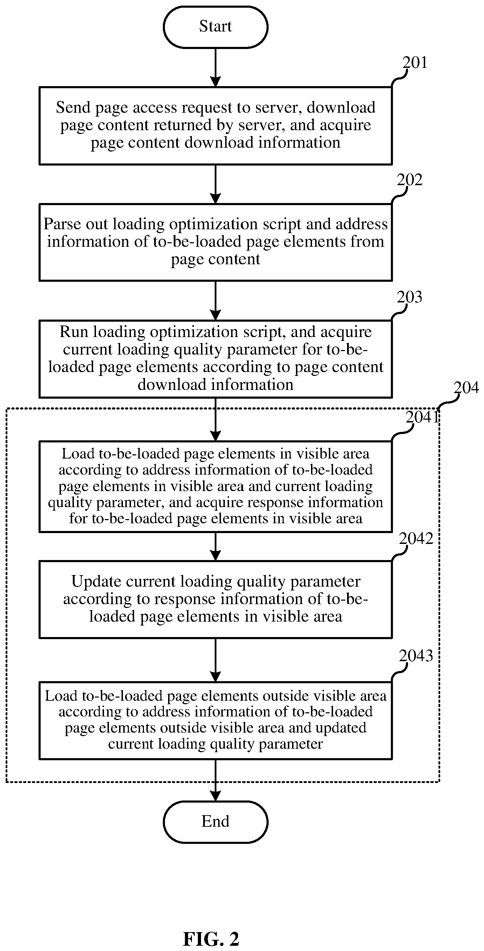

FIG. 2 is a flowchart of a page-loading method consistent with the present embodiment. In the present embodiment, the to-be-loaded page elements include to-be-loaded page elements in a visible area and to-be-loaded page elements outside the visible area.

In the flowchart, Steps 201 to 203 are substantially the same as Steps 101 to 103, which are not to be described again here. The main difference lies in Step 204, which includes the following sub-steps:

Sub-step 2041: Load the to-be-loaded page elements in the visible area according to the address information of the to-be-loaded page elements in the visible area and the current loading quality parameter, and acquire response information for the to-be-loaded page elements in the visible area.

Specifically, the terminal sends a request, for acquiring to-be-loaded page elements with the current loading quality parameter, to the server according to the address information of the to-be-loaded page elements in the visible area. After receiving the acquisition request, the server determines whether there are cached to-be-loaded page elements with the current loading quality parameter. If there is no cached to-be-loaded page element with the current loading quality parameter, the server compresses a to-be-loaded page element(s) to obtain the to-be-loaded page element(s) with the current loading quality parameter and returns the compressed page element(s) to the terminal. The terminal loads the to-be-loaded page element(s) with the current loading quality parameter in the visible area. At the same time, the terminal may acquire the response information of the to-be-loaded page element(s) in the visible area. The response information includes the size(s) of the to-be-loaded page element(s) and the response time period(s) of the to-be-loaded page element(s). Here, the response time period of a to-be-loaded page element may be obtained according to the response-starting time of the to-be-loaded page element and the response-ending time of the to-be-loaded page element.

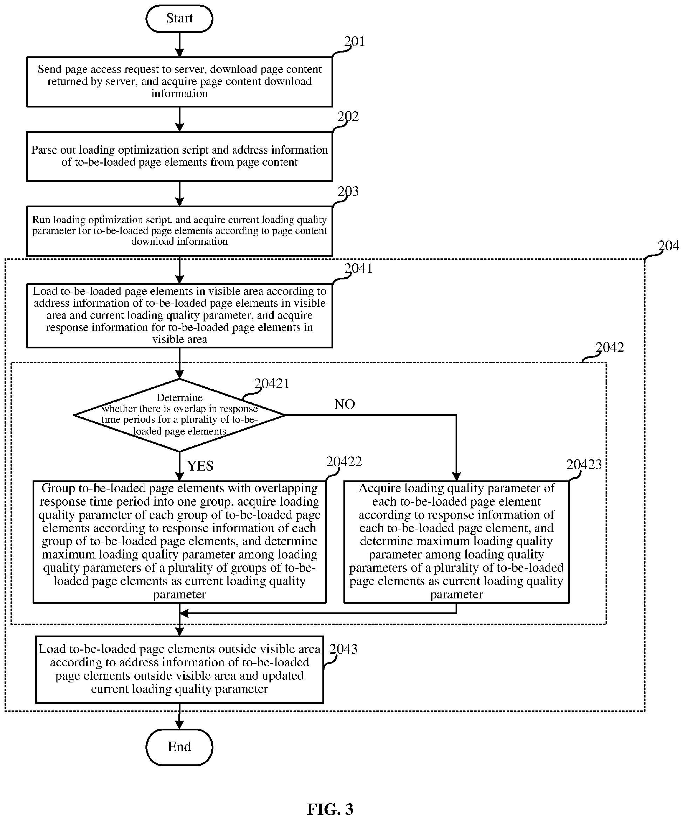

Sub-step 2042: Update the current loading quality parameter according to the response information of the to-be-loaded page element(s) in the visible area. Referring to FIG. 3, Sub-step 2042 includes the following sub-sub-steps:

Sub-sub-step 20421: Determine whether there is an overlap in response time periods for a plurality of to-be-loaded page elements; if there is an overlap, proceed to Sub-sub-step 20422; if there is no overlap, proceed to Sub-sub-step 20423.

Specifically, the response time periods of a plurality of to-be-loaded page elements are arranged in ascending order, so that it may be determined whether there is an overlap in the response time periods of the plurality of to-be-loaded page elements. The to-be-loaded page elements with an overlapping response time period are parallel resources. If there is an overlap in the response time periods of the plurality of to-be-loaded page elements, then proceed to Sub-sub-step 20422. If there is no overlap in the response time periods of the plurality of to-be-loaded page elements, proceed to Sub-sub-step 20423.

Preferably, when determining whether there is an overlap in the response time periods of the plurality of to-be-loaded page elements, caching requests and small-resource requests (the size of a to-be-loaded page element is less than a preset threshold) in the plurality of to-be-loaded elements may be filtered out first, so as to reduce the calculation error.

Sub-sub-step 20422: Group to-be-loaded page elements with an overlapping response time period into one group, acquire the loading quality parameter of each group of to-be-loaded page elements according to response information of each group of to-be-loaded page elements, and determine the maximum loading quality parameter among the loading quality parameters of a plurality of groups of to-be-loaded page elements as the current loading quality parameter.

Specifically, the terminal divides the to-be-loaded page elements with overlapping response time periods into one group. For each to-be-loaded page element in each group, according to the size of the to-be-loaded page element, the non-overlapping time period(s), the overlapping time period(s), and the number of overlaps in the overlapping time period(s), the loading speed of the to-be-loaded page element is calculated. The specific calculation may use the following formula: loading speed of a to-be-loaded page element = size of the to-be-loaded page element / (non-overlapping time period(s) + overlapping time period(s) * number of overlaps in the overlapping time period(s)).

Next, according to the size and loading speed of each to-be-loaded page element in each group, the loading network bandwidth of each group of to-be-loaded page elements is calculated. Specifically, the ratio of the size of each to-be-loaded page element in each group to the sum of the sizes of all the to-be-loaded page elements in that group is used as a weight. Then, the loading speed of each to-be-loaded page element is multiplied by the corresponding weight and then added together, to calculate the loading network bandwidth for each group of to-be-loaded page elements. For example, a group of to-be-loaded page elements includes three to-be-loaded page elements, namely, a to-be-loaded page element A, a to-be-loaded page element B, and a to-be-loaded page element C, and the size and loading speed of the three to-be-loaded page elements are respectively (MA, SA), (MB, SB), and (MC, SC). Then, the loading network bandwidth for the group of the three to-be-loaded page elements = SA^{∗}(MA / MA+ MB + MC) + SB ^{∗}(MB / MA+ MB + MC) + SC ^{∗}(MC / MA+ MB + MC). It should be noted that, in the disclosed embodiment, the average value of the loading speeds of the to-be-loaded page elements in each group may also be used as the loading network bandwidth for each group of to-be-loaded page elements. The methods for calculating the loading network bandwidth are not limited in the disclosed embodiment.

Finally, according to the correspondence between the pre-stored network bandwidth and loading quality parameter, the loading quality parameter corresponding to the loading network bandwidth of each group of to-be-loaded page elements is obtained and used as the loading quality parameter for each group of to-be-loaded page elements. The maximum loading quality parameter among the loading quality parameters of the plurality of groups of to-be-loaded page elements is then used as the current loading quality parameter.

Sub-sub-step 20423: Acquire the loading quality parameter of each to-be-loaded page element according to response information of each to-be-loaded page element, and determine the maximum loading quality parameter among the loading quality parameters of the plurality of to-be-loaded page elements as the current loading quality parameter.

Specifically, the ratio of the size of a to-be-loaded page element to the loading time period is used as the loading network bandwidth of the to-be-loaded page element. Next, according to the correspondence, between the network bandwidth and the loading quality parameter, pre-stored on the terminal, the loading quality parameter corresponding to the loading network bandwidth of each to-be-loaded page element is obtained and used as the loading quality parameter of each to-be-loaded page element. The maximum loading quality parameter among the loading quality parameters of the plurality of to-be-loaded page elements is used as the current loading quality parameter.

Sub-step 2043: Load the to-be-loaded page elements outside the visible area according to the address information of the to-be-loaded page elements outside the visible area and the updated current loading quality parameter.

Specifically, the terminal sends a request, for the to-be-loaded page elements with the updated current loading quality parameter, to the server according to the address information of the to-be-loaded page elements outside the visible area. The server determines whether there is a cached to-be-loaded page element(s) with the updated current loading quality parameter after receiving the acquisition request. If there is no cached to-be-loaded page element with the updated current loading quality parameter, the server compresses a to-be-loaded page element(s) to obtain a to-be-loaded page element(s) with the updated current loading quality parameter and returns the compressed element(s) to the terminal. The terminal loads the to-be-loaded page element(s) with the updated current loading quality parameter outside the visible area.

It should be noted that, in the disclosed embodiment, the current loading quality parameter is updated according to the response information of the to-be-loaded page elements in the visible area. However, the disclosed embodiment is not limited to this implementation. In a webpage, besides the request for the to-be-loaded page elements in the visible area, there are also requests for other resources. For example, taking a to-be-loaded page element like an image as an example, there is also a fuzzy image request. In this situation, the current loading quality parameter may be updated by using the response information for the requests of all the resources on the page.

Compared with Embodiment 1, in a case that the current loading quality parameter determined based on the page content download information alone may be insufficiently accurate, the current loading quality parameter may be updated according to the response information of the to-be-loaded page elements in the visible area, after the loading of the to-be-loaded page elements in the visible area is completed. This then allows a more accurate loading quality parameter to be acquired. By loading the to-be-loaded page elements outside the visible area using the updated current loading quality parameter, the page-loading speed is further improved.

Embodiment 3 of the present disclosure relates to a page-loading method. The present embodiment is an improvement on the basis of Embodiment 1. The main improvement lies in that: a to-be-loaded page element may be obtained from the cache.

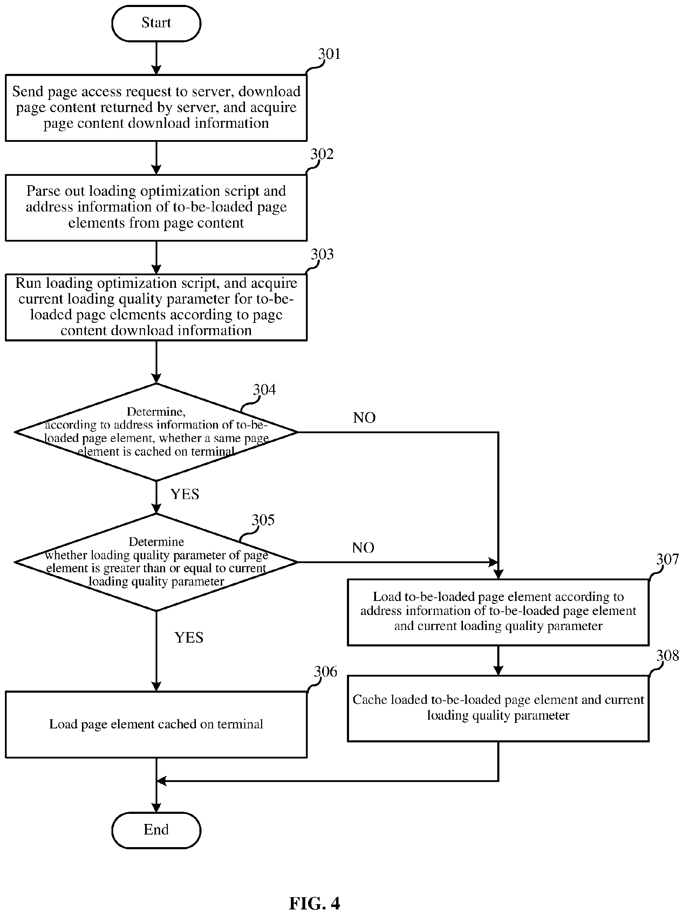

FIG. 4 is a flowchart of a page-loading method consistent with the disclosed embodiment.

In the flowchart, Steps 301 to 303 are substantially the same as Steps 101 to 103. Step 307 is substantially the same as Step 104. The details are not to be described again here. The main difference is that Steps 304 to 306 are added, which are as follows:

Step 304: Determine, according to the address information of a to-be-loaded page element, whether a same page element is cached on the terminal. If a same page element is cached on the terminal, proceed to Step 305. If no same page element is cached on the terminal, proceed to Step 307.

Specifically, the terminal determines whether there is a page element, in the cache of an application such as the browser, that is the same as the address of a to-be-loaded page element. If there is a cached page element on the terminal that is the same as the address of the to-be-loaded page element, proceeds to Step 305. If there is no cached page element on the terminal that is the same as the address of the to-be-loaded page element, it means that the terminal has not cached a page element that is the same as the address of the to-be-loaded page element. Then, proceed to Step 307 to load the to-be-loaded page element according to the address information of the to-be-loaded page element and the current loading quality parameter.

Step 305: Determine whether the loading quality parameter of the page element is greater than or equal to the current loading quality parameter. If the loading quality parameter of the page element is greater than or equal to the current loading quality parameter, proceed to Step 306. If the loading quality parameter of the page element is less than the current loading quality parameter, proceed to Step 307.

Specifically, when there is a cached page element having the same address as a to-be-loaded page element on the terminal, it is then determined whether the loading quality parameter of the page element cached on the terminal is greater than or equal to the current loading quality parameter. If the loading quality parameter of the page element cached on the terminal is greater than or equal to the current loading quality parameter, it means that the quality of the cached page element is at least equal to the quality of the requested to-be-loaded page element. At this moment, proceed to Step 306. If the loading quality parameter of the page element cached on the terminal is less than the current loading quality parameter, it means that the quality of the page element cached on the terminal is worse than the quality of the requested to-be-loaded page element. Then, the page element cached on the terminal is not to be used, and the loading of the to-be-loaded page element will be completed by using the current loading quality parameter. At this moment, proceed to Step 307, and the to-be-loaded page element is loaded according to the address information of the to-be-loaded page element and the current loading quality parameter.

Step 306: Load the page element cached on the terminal.

Specifically, the terminal acquires a page element, that is the same as the to-be-loaded page element, from the cache of an application such as a browser, and loads the page element.

Step 307: Load the to-be-loaded page element according to the address information of the to-be-loaded page element and the current loading quality parameter.

In one example, after Step 307, the method further includes:

Step 308: Cache the loaded to-be-loaded page element and the current loading quality parameter.

Specifically, after loading a to-be-loaded page element, the terminal caches the to-be-loaded page element in the local storage, and also caches the current loading quality parameter as the loading quality parameter for the to-be-loaded page element. If the terminal has already cached the same page element, update the cached page element on the terminal by replacing the cached page element on the terminal with the just loaded to-be-loaded page element and the current loading quality parameter. In addition, when the to-be-loaded page element and the current loading quality parameter are cached, a cache expiration time may also be configured for the to-be-loaded page element. This allows the to-be-loaded page element to be automatically deleted after the cache expiration time, thereby avoiding the occupation of the storage space of the terminal for a long time by the to-be-loaded page element.

Compared with Embodiment 1, before loading a to-be-loaded page element, the present embodiment determines whether a same page element is cached on the terminal. If the terminal caches the same page element and the cached page element has a loading quality parameter greater than or equal to the current loading quality parameter, the page element cached on the terminal is directly loaded, so that the to-be-loaded page element with a greater loading quality parameter may be acquired from the cache of the terminal. It is to be noted that the present embodiment may also be implemented as an improvement on the basis of Embodiment 2, through which the similar technical effects may be achieved.

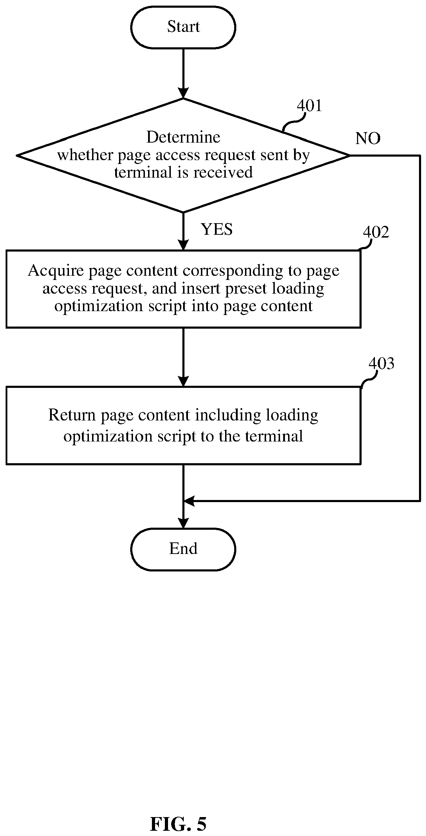

Embodiment 4 of the present disclosure relates to a page-responding method, which is applied to a server. FIG. 5 is a flowchart of a page-responding method consistent with the disclosed embodiment.

Step 401: Determine whether a page access request sent by a terminal is received. If the page access request is received, proceed to Step 402. If the page access request is not received, directly end the process.

Specifically, when a user inputs an access address in an application such as a browser on a terminal, the terminal sends a page access request to the server. When the server receives the page access request sent by the terminal, the process proceeds to Step 402. If the server didn't receive the page access request, directly end the process.

Step 402: Acquire page content corresponding to the page access request, and insert a preset loading optimization script into the page content.

Specifically, the server acquires page content corresponding to the page access request, where the page content may be an HTML document. The server inserts a preset loading optimization script into the HTML document, for example, inserts a loading optimization script before the </body> tag of the HTML document. However, the disclosed embodiment is not limited to this implementation, and the loading optimization script may be inserted anywhere in the HTML document.

Step 403: Return, to the terminal, page content including the loading optimization script.

Specifically, the server returns the page content including the loading optimization script to the terminal, so that when the terminal acquires the page content, the terminal performs a DOM parsing on the page content, and obtains the loading optimization script and the address information of to-be-loaded page elements. Next, the terminal runs the loading optimization script, and calculates the current network bandwidth according to page content download information. Correspondence between the network bandwidth and the loading quality parameter is pre-stored on the terminal, so that the loading quality parameter corresponding to the current network bandwidth may be obtained according to the correspondence, which is then used as the current loading quality parameter for the to-be-loaded page elements. Accordingly, based on the current network bandwidth, it is possible to determine what quality of to-be-loaded page elements are to be loaded. Here, the specific implementation in calculating the current network bandwidth according to the page content download information is: calculating the time for downloading the page content according to the response-ending time and the response-starting time from the page content download information, and dividing the size of the page content by the time for downloading, to obtain the current network bandwidth.

Next, according to the address information of the to-be-loaded page elements, the terminal sends a request for acquiring the to-be-loaded page elements with the current loading quality parameter to the server. After receiving the acquisition request, the server determines whether there are cached to-be-loaded page elements with the current loading quality parameter. If there is no cached to-be-loaded page element with the current loading quality parameter, the to-be-loaded page elements are compressed to obtain to-be-loaded page elements with the current loading quality parameter and the compressed page elements are returned to the terminal. The terminal loads the to-be-loaded page elements with the current loading quality parameter.

In the disclosed embodiment, a loading optimization module for monitoring a page access request of a terminal may be configured on the terminal. The loading optimization module inserts a preset loading optimization script in the page content corresponding to a page access request when receiving the page access request. When receiving the acquisition request of the to-be-loaded page elements with the current loading quality parameter, the server determines whether there are cached to-be-loaded page elements with the current loading quality parameter. If there is no cached to-be-loaded page element with the current loading quality parameter, the cached to-be-loaded page elements are compressed to obtain to-be-loaded page elements with the current loading quality parameter, and the compressed page elements are returned to the terminal. The terminal loads the to-be-loaded page elements with the current loading quality parameter.

Since Embodiment 1 corresponds to the present embodiment, the present embodiment may be implemented in cooperation with Embodiment 1. The relevant technical details discussed in Embodiment 1 are still valid in the present embodiment. The technical effects that may be achieved in Embodiment 1 may also be achieved in the present embodiment. To reduce repetition, details are not described again here. Correspondingly, the related technical details discussed in this embodiment may also be applied to Embodiment 1.

Compared with the existing technologies, in the disclosed embodiment, after a terminal sends a page access request to the server, the terminal downloads the page content returned by the server and obtains the page content download information. The terminal parses out a loading optimization script and the address information of the to-be-loaded page elements from the page content. That is, the page content returned by the server includes a loading optimization script and the address information of the to-be-loaded page elements. Next, the terminal runs the loading optimization script to obtain the current loading quality parameter for the to-be-loaded page elements according to the page content download information, and loads the to-be-loaded page elements according to the address information of the to-be-loaded page elements and the current loading quality parameter. That is, the corresponding current loading quality parameter is set for the to-be-loaded page elements according to the page content download information. When the page content download information looks good, to-be-loaded page elements with high quality are downloaded. When the page content download information looks bad, to-be-loaded page elements with lower quality are downloaded. In this way, the page-loading speed is improved.

Embodiment 5 of the present disclosure relates to a terminal, such as a mobile phone, a tablet, and the like. The terminal includes at least one processor; and a memory communicatively coupled to the at least one processor; where

the memory stores instructions executable by the at least one processor, and the instructions when executed by the at least one processor cause the at least one processor to implement any of the page-loading methods described in Embodiments 1 to 3.

Here, the memory and the at least one processor are connected through a bus. The bus may include any number of interconnected buses and bridges that connect the various circuits of the at least one processor and the memory. The bus may also connect various other circuits, such as peripherals, voltage regulator, and power management circuits, as is well known in the art, and therefore, will not be further described here. A bus interface provides an interface between the bus and a transceiver. The transceiver may be an element or a plurality of elements, such as multiple receivers and transmitters, that provide means for communicating with various other devices on a transmission medium. The data processed by the at least one processor is transmitted over the wireless medium via an antenna. Further, the antenna also receives the data and transmits the data to the at least one processor.

The at least one processor is responsible for managing the bus and normal processing, as well as providing various functions including timing, peripheral interfaces, voltage regulation, power management, and other control functions. The memory may be used to store data used by the at least one processor when performing certain operations.

Embodiment 6 of the present disclosure relates to a server, where the server includes at least one processor and a memory communicably coupled to the at least one processor.

The memory stores instructions executable by the at least one processor, where the instructions when executed by the at least one processor cause the at least one processor to implement any of the page-responding methods in Embodiment 4.

Embodiment 7 of the present disclosure relates to a computer-readable storage medium storing a computer program. The computer program, when executed by the processor, implements the above-described method embodiments.

A person skilled in the art may understand that all or part of the steps of the foregoing embodiments may take the form of implementation of programs for instructing relevant hardware. The programs may be stored in a storage medium, and include a series of instructions that cause a device (may be a microcontroller, a chip, etc.) or a processor to perform all or part of the steps of each embodiment of the present disclosure. The storage medium includes various media for storing program code, such as a flash drive, a mobile hard drive, a read-only memory (ROM), a random access memory (RAM), a magnetic disk, or an optical disk, and the like.

A person skilled in the art may understand that the foregoing embodiments are merely specific embodiments for implementing the present disclosure. In real applications, various modifications may be made in the form and details of these embodiments without departing from the spirit and principle of the present disclosure.

## Claims

1. A page-loading method for application on a terminal, comprising:
sending a page access request to a server, downloading page content returned by the server, and acquiring page content download information;
parsing out a loading optimization script and address information of one or more to-be-loaded page elements from the page content;
running the loading optimization script, and acquiring a current loading quality parameter for the one or more to-be-loaded page elements according to the page content download information; and
loading the one or more to-be-loaded page elements according to the address information of the one or more to-be-loaded page elements and the current loading quality parameter.

2. The page-loading method according to claim 1, wherein the one or more to-be-loaded page elements include one or more to-be-loaded page elements in a visible area and one or more to-be-loaded page elements outside the visible area, and loading the one or more to-be-loaded page elements according to the address information of the one or more to-be-loaded page elements and the current loading quality parameter further includes:
loading the one or more to-be-loaded page elements in the visible area according to address information of the one or more to-be-loaded page elements in the visible area and the current loading quality parameter, and acquiring response information of the one or more to-be-loaded page elements in the visible area;
updating the current loading quality parameter according to the response information of the one or more to-be-loaded page elements in the visible area; and
loading the one or more to-be-loaded page elements outside the visible area according to address information of the one or more to-be-loaded page elements outside the visible area and the updated current loading quality parameter.

3. The page-loading method according to claim 2, wherein, before loading the one or more to-be-loaded page elements outside the visible area according to the address information of the one or more to-be-loaded page elements outside the visible area and the updated current loading quality parameter, the method further includes:
monitoring one or more page elements in the visible area, and determining whether there is a change among the one or more page elements in the visible area within a preset time period;
when there is no change among the one or more page elements in the visible area within the preset time period, loading the one or more to-be-loaded page elements outside the visible area according to the address information of the one or more to-be-loaded page elements outside the visible area and the updated current loading quality parameter; and
when there is a change among the one or more page elements in the visible area within the preset time period and when there is an unloaded to-be-loaded page element in the visible area, loading the unloaded to-be-loaded page element in the visible area according to address information of the unloaded to-be-loaded page element in the visible area and the updated current loading quality parameter.

4. The page-loading method according to claim 2, wherein the one or more to-be-loaded page elements in the visible area include a plurality of to-be-loaded page elements, and the response information of the one or more to-be-loaded page elements in the visible area includes a size of each of the one or more to-be-loaded page elements in the visible area and a response time period for each of the one or more to-be-loaded page elements in the visible area; and
updating the current loading quality parameter according to the response information of the one or more to-be-loaded page elements in the visible area further includes:
when there is no overlap among response time periods of the plurality of to-be-loaded page elements in the visible area, acquiring a loading quality parameter of each of the one or more to-be-loaded page elements in the visible area according to response information of each of the one or more to-be-loaded page elements in the visible area, and determining a maximum loading quality parameter, among loading quality parameters of the one or more to-be-loaded page elements in the visible area, as the current loading quality parameter, and
when there is an overlap among the response time periods of the plurality of to-be-loaded page elements in the visible area, classifying to-be-loaded page elements that have an overlapping response time period into one group, acquiring a loading quality parameter for each group of to-be-loaded page elements according to response information of the to-be-loaded page elements in each group, and determining a maximum loading quality parameter among loading parameter parameters of a plurality of groups of to-be-loaded page elements as the current loading quality parameter.

5. The page-loading method according to claim 4, wherein a response time period of a to-be-loaded page element includes one or more overlapping time periods and one or more non-overlapping time periods, and acquiring a loading quality parameter for each group of to-be-loaded page elements according to the response information of the to-be-loaded page elements in each group further includes:
for each of the to-be-loaded page elements in each group, calculating a loading speed of the to-be-loaded page element according to a size of the to-be-loaded page element, the one or more non-overlapping time periods, the one or more overlapping time periods, and a number of overlaps in the one or more overlapping periods;
calculating a loading network bandwidth for each group of to-be-loaded page elements according to a size and a loading speed of each of the to-be-loaded page elements in each group and; and
determining a loading quality parameter corresponding to the loading network bandwidth for each group of to-be-loaded page elements as the loading quality parameter for each group of to-be-loaded page elements.

6. The page-loading method according to claim 1, wherein, before loading a to-be-loaded page element according to address information of the to-be-loaded page element and the current loading quality parameter, the method further includes:
determining, according to the address information of the to-be-loaded page element, whether a same page element is cached on the terminal;
if a same page element is cached on the terminal, determining whether a loading quality parameter of the same page element is greater than or equal to the current loading quality parameter;
loading the same page element cached on the terminal if the loading quality parameter of the page element is greater than or equal to the current loading quality parameter; and
if the loading quality parameter of the page element is less than the current loading quality parameter, or the same page element is not cached on the terminal, loading the to-be-loaded page element according to the address information of the to-be-loaded page element and the current loading quality parameter.

7. The page-loading method according to claim 1, wherein, after loading the one or more to-be-loaded page elements according to the address information of the one or more to-be-loaded page elements and the current loading quality parameter, the method further includes:
caching the loaded one or more to-be-loaded page elements and the current loading quality parameter.

8. The page-loading method according to claim 1, wherein acquiring the current loading quality parameter for the one or more to-be-loaded page elements according to the page content download information further includes:
calculating a current network bandwidth according to the page content download information; and
acquiring a loading quality parameter corresponding to the current network bandwidth as the current loading quality parameter for the one or more to-be-loaded page elements.

9. The page-loading method according to claim 1, wherein the one or more to-be-loaded page elements include an image.

10. A page-responding method for application on a server, comprising:
when a page access request sent by a terminal is received, acquiring page content corresponding to the page access request, and inserting a preset loading optimization script into the page content; and
returning, to the terminal, the page content including the inserted loading optimization script, to allow the terminal to parse out the loading optimization script and address information of one or more to-be-loaded page elements from the page content, run the loading optimization script, acquire a current loading quality parameter for the one or more to-be-loaded page elements according to page content download information, and load the one or more to-be-loaded page elements according to the address information of the one or more to-be-loaded page elements and the current loading quality parameter.

11. A terminal, comprising:
at least one processor; and
a memory communicatively coupled to the at least one processor, wherein
the memory stores instructions executable by the at least one processor, the instructions when executed by the at least one processor causing the at least one processor to implement the page-loading method according to any one of claims 1 to 9.

12. A computer-readable storage medium storing a computer program, wherein the computer program is executed by a processor to implement the page-loading method according to any one of claims 1 to 9.

13. A server, comprising:
at least one processor; and
a memory communicatively coupled to the at least one processor, wherein
the memory stores instructions executable by the at least one processor, the instructions when executed by the at least one processor causing the at least one processor to implement the page-responding method of claim 10.
